# EUROPÄISCHE PATENTSCHRIFT

(11) **EP 0 709 436 B1**
(45) Veröffentlichungstag und Bekanntmachung des Hinweises auf die Patenterteilung: **13.01.1999**
(21) Anmeldenummer: 95116334.4
(22) Anmeldetag: 17.10.1995
(51) Int. Cl.: C09B 62/08, C09B 62/51, C09B 67/24, C09B 67/26, D06P 1/38, D06P 3/10, D06P 3/66

(54) **Verfahren zum Färben und Bedrucken von hydroxy- und/oder carbonamidgruppenhaltigen Materialien**
Process for dyeing and printing materials containing hydroxy and/or carbonamide groups
Procédé pour la teinture et l'impression de matériaux contenant des groupements hydroxy et/ou carbonamide

(30) Priorität: 28.10.1994 DE 4438544
(43) Veröffentlichungstag der Anmeldung: 01.05.1996
(73) Patentinhaber: BAYER AG, 51368 Leverkusen (DE)
(72) Erfinder: Jäger, Horst, Dr., D-51375 Leverkusen (DE); Wolff, Joachim, Dr., D-51519 Odenthal (DE)

(56) Entgegenhaltungen:
- EP-A- 0 094 055
- EP-A- 0 267 524
- EP-A- 0 305 021
- EP-A- 0 318 968
- EP-A- 0 486 176
- EP-A- 0 559 617

## Beschreibung

Die Erfindung betrifft ein Verfahren zum Färben und Bedrucken hydroxy- und/oder carbonamidgruppenhaltiger Materialien mit einem Azoreaktivfarbstoff.

Azoreaktivfarbstoffe sind aus zahlreichen Veröffentlichungen bekannt, z.B. EP-A 32 187, EP-A 94 055, EP-A 305 021 und EP-A 318 968. Bei dem aus EP-A 318 968 bekannten Färbeverfahren sind die verwendeten Azoreaktivfarbstoffe mit einer Triazingruppe substituiert, die nicht mit einem Halogenatom, sondern mit einer Pyridino- oder Aminogruppe substituiert sind.

Die vorliegende Erfindung betrifft ein Verfahren zum Färben und Bedrucken hydroxy- und/oder carbonamidhaltiger Materialien mit einem Reaktivfarbstoff, dadurch gekennzeichnet, daß der Reaktivfarbstoff in Form der freien Säure folgender Formel entspricht 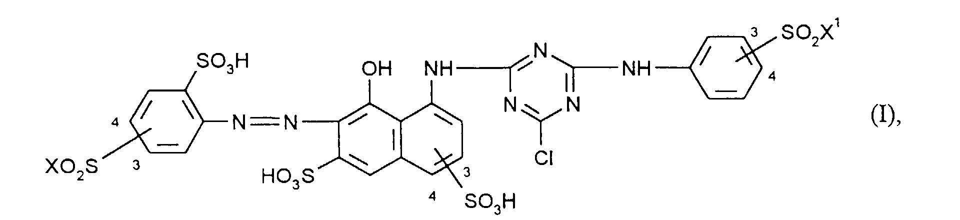 wobei die Reste SO₂X, SO₂X¹ und die zweite Sulfogruppe in Rest der Aminonaphthol-disulfonsäure jeweils in 3- oder 4-Stellung stehen und
- X und X¹: CH=CH₂ oder CH₂CH₂Z bedeuten, wobei Z einen unter Färbebedingungen abspaltbaren Substituenten bedeutet, und X und X¹ gleich oder verschieden sein können.

Beispiele für Z sind: OSO₃H, S₂O₃H, OPO₃H₂, OCOCH₃, OSO₂CH₃ oder Cl.

In Formel (I) ist der Farbstoff bevorzugt, in denen der Rest SO₂X in 4-Stellung, die Sulfogruppe im Naphthalinkern in 3-Stellung und der Rest SO₂X¹in 4-Stellung steht.

Die Reaktionsbedingungen der Herstellung entsprechen den auf dem Gebiet der Acylierung, Diazotierung und Kupplung üblichen Bedingungen. So erfolgt die Herstellung der Farbstoffe vorzugsweise im wäßrigen Medium. So werden Aminonaphtholsulfonsäuren der Formel 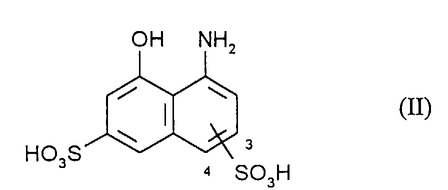 mit Cyanurchlorid im schwach sauren bis sauren wäßrigen Medium kondensiert und die resultierende Dichlortriazinverbindung wird mit einer Diazoverbindung, die durch Diazotieren eines Amins der Formel 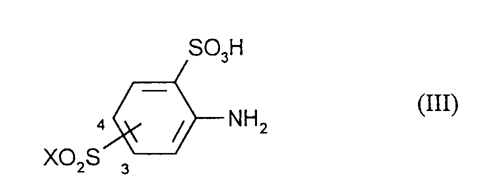 worin X die angegebene Bedeutung hat, erhältlich ist, in schwach saurem Medium vereinigt. Anschließend wird im resultierenden Dichlortriazinfarbstoff durch Erwärmen auf 30 bis 50°C im neutralen bis schwach sauren Medium mit einem Amin der Formel 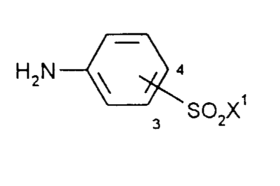 worin X¹ die angegebene Bedeutung hat, ein Chloratom ausgetauscht, wobei die Farbstoffe der Formel (1) entstehen.

Die Isolierung der nach den vorstehenden beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststofformierungen wie auch als konzentrierte Lösungen eingesetzt werden.

In einer bevorzugten Ausführungsform werden die Farbstoffe als Granulate verwendet. Die Granulate der Farbstoffe können in folgenden Schritten erhalten werden:

### Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

### Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die Azoverbindungen (1) besitzen wertvolle Farbstoffeigenschaften. Infolge der beiden faserreaktiven Gruppen SO₂X und des Chlortriazinyl-Restes weisen sie faserreaktive Eigenschaften auf. Hydroxy- und/oder carbonamidgruppenhaltige Materialien, können in Form von Flächengebilden, wie Papier und Leder oder von Folien, in der Masse und/oder in Faserform vorliegen.

Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen der allgemeinen Formel (I) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren, insbesondere nach dem Ausziehverfahren und nach dem Klotzverfahren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten. Man färbt bevorzugt im wäßrigen Bad bei Temperaturen zwischen 60 und 105°C, gegebenenfalls bei Temperaturen bis zu 120°C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten bei sehr gutem Warenbild aufgrund der gegenüber reinen Vinylsulfon-Farbstoffe besseren Löslichkeit erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte mit anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindung der Formel (I) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittel starken anorganischen oder organischen Säuren zu nennen, wobei von Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; sie zeichnen sich auf diesen Fasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Verbindungen der allgemeinen Formel (I) hergestellten Färbungen und Drucke zeichnen sich durch sehr klare Nuancen aus. Insbesondere besitzen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit.

Desweiteren können die erfindungsgemäßen Verbindungen der allgemeinen Formel (I) auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295 bis 299, insbesondere die Ausrüstung nach dem sogenannten Hercosett-Verfahren (S. 298); J. Soc. Dyers and Colourists 1972, 93 bis 99, und 1975, 33 bis 44) mit sehr guten Echtheitseigenschaften färben.

Das Verfahren des Färbens auf Wolle erfolgt hierbei in üblicher und bekannter Färbeweise aus saurem Milieu. So wird beispielsweise dem Färbebad Essigsäure und/oder Ammoniumsulfat oder Essigsäure und Ammoniumacetat oder Natriumacetat zugefügt, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die Verbindung der allgemeinen Formel (I) bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen der Verbindung der Formel (I) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der Verbindungen der allgemeinen Formel (I) sehr gut ist, lassen sie sich auch mit dem Vorteil bei üblichen kontinuierlichen Färbeverfahren einsetzen. Die Farbstärke der erfindungsgemäßen Verbindungen der allgemeinen Formel (I) ist sehr hoch.

Die Monoazofarbstoffe (I) liefern auf den genannten Materialien, bevorzugt Fasermaterialien, sehr klare, rote Färbungen mit überraschend guten Licht- und Chlorechtheiten.

Die angegebenen Formeln sind die der entsprechenden freien Säuren. Die Farbstoffe wurden im allgemeinen in Form von Alkali salzen, insbesondere der Na-Salze isoliert und zum Färben eingesetzt.

### Beispiele

### Beispiel 1

**a) Acylierung der H-Säure mit Cyanurchlorid**
   Eine neutrale Lösung von 31,8 g 1-Amino-8-hydroxynaphthalin-3,6-disulfonsäure (H-Säure) in 200 ml Wasser wird zu einer Anschlämmung von 18,5 g Cyanurchlorid und 0,1 g eines Netzmittels in 200 ml Eiswasser getropft. Man rührt ca. 2 h bei 10 bis 12°C, bis sich keine H-Säure mehr nachweisen läßt.
**b)**
   36,1 g 4-(β-Sulfatoethylsulfonyl)anilin-2-sulfonsäure werden in 500 ml Eiswasser verrührt und mit 28 ml 30 %iger Salzsäure versetzt. Man gibt dann tropfenweise 70 ml 10 %ige Natriumnitritlösung zu und rührt solange bis nur noch ein geringer Nitritüberschuß zu erkennen ist. Dieser wird dann mit Amidosulfonsäure zerstört.
**c)**
   Die nach a) erhaltene Lösung wird mit der nach b) erhaltenen Diazoverbindung versetzt. Durch Einstreuen von Natriumhydrogencarbonat wird ein pH von 3 - 5 eingestellt und solange gerührt bis sich keine Diazoverbindung mehr nachweisen läßt.
**d)**
   Der nach c) erhaltene Azofarbstoff wird mit 28,1 g 4-(β-Sulfatoethylsulfonyl)anilin versetzt und die Temperatur auf 40°C gebracht, wobei ein pH von 4,5 durch Einstreuen von Bicarbonat aufrechterhalten wird. Nach mehrstündigem Rühren ist die Kondensation zu Ende. Zur Isolierung wird die Lösung des Farbstoffes mit 20 Vol.% Kaliumchlorid versetzt. Der resultierende Niederschlag wird abgesaugt, bei 70°C im Umlufttrockenschrank getrocknet und gemahlen. Man erhält ein leicht in Wasser lösliches rotes Pulver. Der Farbstoff entspricht folgender Formel:

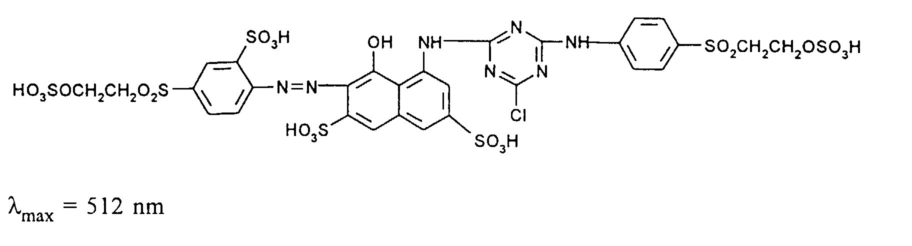

Weitere Farbstoffe werden nach den Angaben dieses Beispiels erhalten, wenn man in Stufe a), b) und d) äquivalente Mengen der in folgender Tabelle aufgeführten Komponenten verwendet.

**Tabelle**

| **Bsp.** | **Stufe a)** | **Stufe b)** | **Stufe c)** | ^{**λ**}**max** |
|---|---|---|---|---|
| 2 | 1-Amino-8-hydroxynaphthalin-4,6-disulfonsäure | 4-(β-Sulfatoethylsulfonyl)anilin-2-sulfonsäure | 4-(β-Sulfatoethylsulfonyl)anilin | 501 nm |
| | | | | |
| 3 | 1-Amino-8-hydroxynaphthalin-4,6-disulfonsäure | 4-(β-Sulfatoethylsulfonyl)anilin-2-sulfonsäure | 3-(β-Sulfatoethylsulfonyl)anilin | 502 nm |
| | | | | |
| 4 | 1-Amino-8-hydroxynaphthalin-4,6-disulfonsäure | 5-(β-Sulfatoethylsulfonyl)anilin-2-sulfonsäure | 3-(β-Sulfatoethylsulfonyl)anilin | 503 nm |
| | | | | |
| 5 | 1-Amino-8-hydroxynaphthalin-4,6-disulfonsäure | 5-(β-Sulfatoethylsulfonyl)anilin-2-sulfonsäure | 4-(β-Sulfatoethylsulfonyl)anilin | 503 nm |
| | | | | |
| 6 | 1-Amino-8-hydroxynaphthalin-3,6-disulfonsäure | 5-(β-Sulfatoethylsulfonyl)anilin-2-sulfonsäure | 4-(β-Sulfatoethylsulfonyl)anilin | 513 nm |
| | | | | |
| 7 | 1-Amino-8-hydroxynaphthalin-3,6-disulfonsäure | 5-(β-Sulfatoethylsulfonyl)anilin-2-sulfonsäure | 3-(β-Sulfatoethylsulfonyl)anilin | 513 nm |
| | | | | |
| 8 | 1-Amino-8-hydroxynaphthalin-3,6-disulfonsäure | 4-(β-Sulfatoethylsulfonyl)anilin-2-sulfonsäure | 3-(β-Sulfatoethylsulfonyl)anilin | 512 nm |

### Färbevorschrift I

2 Teile des gemäß Beispiel 1 erhaltenen Farbstoffes werden in 400 Teilen Wasser gelöst; dazu gibt man 1.500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäß Beispiel 1 erhaltenen Reaktivfarbstoffes werden in 400 Teilen Wasser gelöst; dazu gibt man 1.500 Teile einer Lösung, die pro Liter 53 g Natriumchlorid enthält. In dieses Färbebad geht man bei 35°C mit 100 Teilen eines Baumwollgewebes ein. Nach 205 Minuten werden 100 Teile einer Lösung, die pro Liter 16 g Natriumhydroxid und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochen geseift, nochmals gespült und getrocknet.

### Färbevorschrift III

8 Teile des gemäß Beispiel 1 erhaltenen Reaktivfarbstoffes werden in 400 Teilen Wasser gelöst; dazu gibt man 1.400 Teile einer Lösung, die pro Liter 100 g Natriumchlorid enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Die Temperatur des Färbebades wird innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäß Beispiel 1 erhaltenen Reaktivfarbstoffes werden in 50 Teilen Wasser gelöst. Dazu gibt man 50 Teile einer Lösung, die pro Liter 5 g Natriumhydroxid und 20 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäß Beispiel 1 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäß Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so daß es um 75 % seines Gewichtes zunimmt, und dann getrocknet. Dann imprägniert man das Gewebe mit einer 20°C warmen Lösung, die pro Liter 4 g Natriumhydroxid und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift I

3 Teile des gemäß Beispiel 1 erhaltenen Reaktivfarbstoffs werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschließend getrocknet.

### Druckvorschrift II

5 Teile des gemäß Beispiel 1 erhaltenen Reaktivfarbstoffs werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschließend getrocknet.

## Patentansprüche

1. Verfahren zum Färben und Bedrucken hydroxy- und/oder carbonamidhaltiger Materialien mit einem Reaktivfarbstoff, dadurch gekennzeichnet, daß der Reaktivfarbstoff in Form der freien Säure folgender Formel entspricht 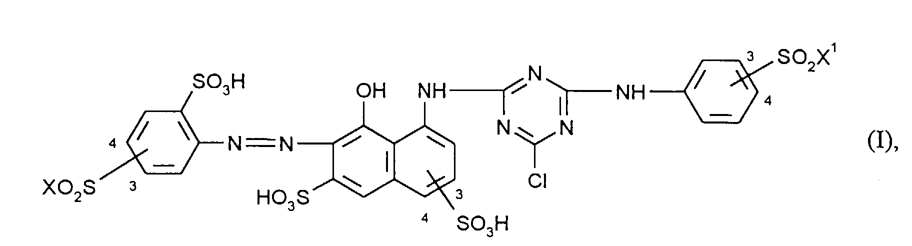 wobei die Reste SO₂X, SO₂X¹ und die zweite Sulfogruppe im Rest der Aminonaphthol-disulfonsäure jeweils in 3- oder 4-Stellung stehen und
X und X¹ CH=CH₂ oder CH₂CH₂Z bedeuten, wobei Z einen unter Färbebedingungen abspaltbaren Substituenten bedeutet, und X und X¹ gleich oder verschieden sein können.

2. Verfahren nach Anspruch 1, dadurch gekennzeichnet, daß Z OSO₃H, S₂O₃H, OPO₃H₂, OCOCH₃, OSO₂CH₃ oder Cl bedeutet.

3. Verfahren nach wenigstens einem der vorhergehenden Ansprüche, dadurch gekennzeichnet, daß die Reste SO₂X und SO₂X¹ in 4-Stellung und die zweite Sulfogruppe im Naphthalinkern in 3-Stellung stehen.

4. Verfahren nach wenigstens einem der vorhergehenden Ansprüche, dadurch gekennzeichnet, daß der Farbstoff folgender Formel entspricht

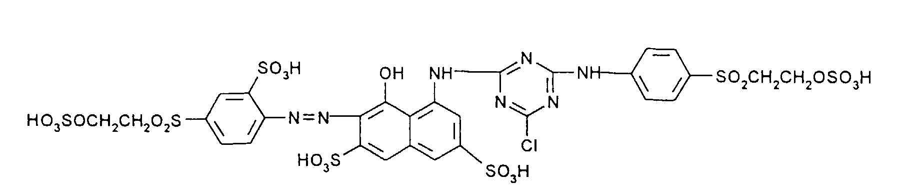

5. Verfahren nach wenigstens einem der vorhergehenden Ansprüche, dadurch gekennzeichnet, daß die Färbung nach dem Ausziehprozeß erfolgt.

6. Verfahren nach wenigstens einem der Ansprüche 1 bis 4, dadurch gekennzeichnet, daß die Färbung nach dem Klotzverfahren erfolgt.

7. Verfahren zur Herstellung von Reaktivfarbstoffgranulaten, dadurch gekennzeichnet, daß der Farbstoff der Formel gemäß Anspruch 1 entspricht und das Granulat durch Sprühtrocknung der Syntheselösung oder -suspension in einem Sprühtrockner erhalten wird.

8. Farbstoffpulver oder Granulat, enthaltend (in Gew.-%) 30 bis 80 % eines Reaktivfarbstoffes gemäß Anspruch 1,
3 bis 50 % eines Puffers und
5 bis 15 % Wasser,
jeweils bezogen auf die Gesamtzusammensetzung.

9. Wäßrige Reaktivfarbstofflösung, enthaltend (jeweils bezogen auf das Gesamtgewicht der Lösung)
5 bis 50 % eines Farbstoffes gemäß Anspruch 1,
0,1 bis 50 % eines Puffers,
wobei die Lösung einen pH-Wert von 3,5 bis 7,5 aufweist.

10. Gefärbte oder bedruckte Substrate, dadurch gekennzeichnet, daß sie wenigstens teilweise mit einem Reaktivfarbstoff gemäß Anspruch 1 gefärbt oder bedruckt worden sind.

## Claims

1. Process for dyeing and printing materials containing hydroxyl and/or carboxamide groups with a reactive dyestuff, characterized in that the reactive dyestuff corresponds, in the form of the free acid, to the following formula 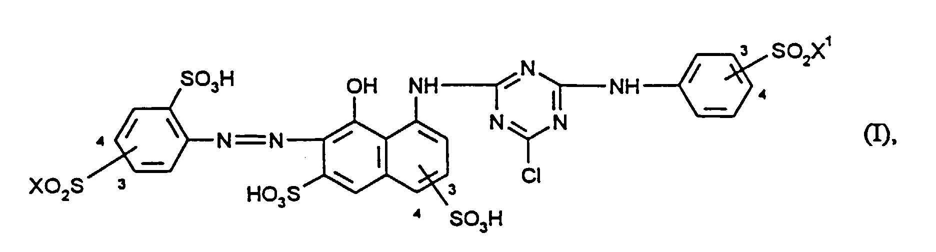 in which the radicals SO₂X and SO₂X¹ and the second sulpho group in the radical of the aminonaphtholdisulphonic acid are each in the 3- or 4-position and
X and X¹ denote CH=CH₂ or CH₂CH₂Z, in which Z denotes a substituent which can be eliminated under dyeing conditions, and X and X¹ can be identical or different.

2. Process according to Claim 1, characterized in that Z is OSO₃H, S₂O₃H₂, OPO₃H, OCOCH₃, OSO₂CH₃ or Cl.

3. Process according to at least one of the preceding claims, characterized in that the radicals SO₂X and SO₂X¹ are in the 4-position and the second sulpho group in the naphthalene nucleus is in the 3-position.

4. Process according to at least one of the preceding claims, characterized in that the dyestuff corresponds to the following formula

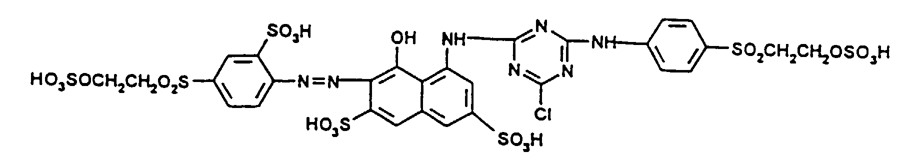

5. Process according to at least one of the preceding claims, characterized in that dyeing is carried out by the exhaust method.

6. Process according to at least one of Claims 1 to 4, characterized in that dyeing is carried out by the padding method.

7. Process for the preparation of reactive dyestuff granules, characterized in that the dyestuff corresponds to the formula according to Claim 1 and the granules are obtained by spray drying the solution or suspension from the synthesis in a spray dryer.

8. Dyestuff powder or dyestuff granules comprising (in % by weight) 30 to 80% of a reactive dyestuff according to Claim 1,
3 to 50% of a buffer and
5 to 15% of water,
in each case based on the total composition.

9. Aqueous reactive dyestuff solution comprising (in each case based on the total weight of the solution)
5 to 50% of a dyestuff according to Claim 1 and
0.1 to 50% of a buffer,
the solution having a pH of from 3.5 to 7.5.

10. Dyed or printed substrate, characterized in that it has been at least partly dyed or printed with a reactive dyestuff according to Claim 1.

## Revendications

1. Procédé pour la teinture et l'impression de matières contenant des groupes hydroxy et/ou carboxamides à l'aide d'un colorant réactif, caractérisé en ce que le colorant réactif, à l'état d'acide libre, répond à la formule suivante : 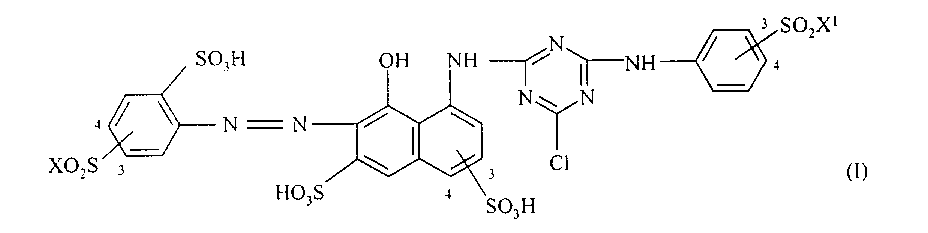 dans laquelle les groupes SO₂X, SO₂X¹ et le deuxième groupe sulfo du radical de l'acide aminonaphtol-disulfonique sont tous dans les positions 3 ou 4 et
X et X¹ représentent CH = CH₂ ou CH₂CH₂Z, Z étant un substituant éliminable dans les conditions de la teinture, et X et X¹ pouvant avoir des significations identiques ou différentes.

2. Procédé selon la revendication 1, caractérisé en ce que Z représente OSO₃H, S₂O₃H, OPO₃H₂, OCOCH₃, OSO₂CH₃ ou Cl.

3. Procédé selon au moins une des revendications qui précédent caractérisé en ce que les groupes SO₂X et SO₂X¹ sont en position 4 et le deuxième groupe sulfo du noyau naphtalénique en position 3.

4. Procédé selon au moins une des revendications qui précèdent caractérisé en ce que le colorant répond à la formule suivante :

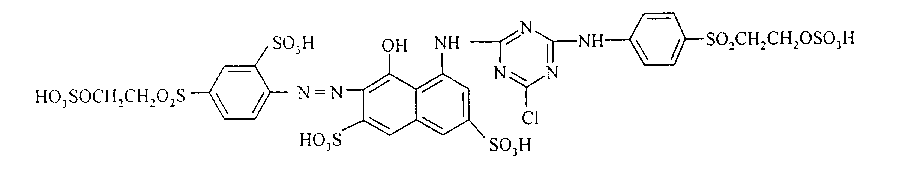

5. Procédé selon au moins une des revendications qui précédent, caractérisé en ce que la teinture est réalisée par épuisement.

6. Procédé selon au moins une des revendications 1 à 4 caractérisé en ce que la teinture est réalisée par foulardage.

7. Procédé de préparation de granulés de colorant réactif caractérisé en ce que le colorant répond à la formule donnée dans la revendication 1 et en ce que les granulés sont obtenus par séchage-atomisation de la solution ou suspension de synthèse dans un séchoir-atomiseur.

8. Poudre ou granulés de colorant contenant, en % en poids,
30 à 80 % d'un colorant réactif selon la revendication 1,
3 à 50 % d'un tampon et
5 à 15 % d'eau,
dans tous les cas par rapport au produit total.

9. Solution aqueuse de colorant réactif contenant (sur son poids total)
5 à 50 % d'un colorant selon la revendication 1,
0,1 à 50 % d'un tampon,
et présentant un pH de 3,5 à 7,5.

10. Substrats teints ou imprimés caractérisés en ce qu'ils ont été teints ou imprimés, en partie au moins, par un colorant réactif selon la revendication 1.
